# EUROPÄISCHE PATENTSCHRIFT

(11) **EP 1 262 099 B1**
(45) Veröffentlichungstag und Bekanntmachung des Hinweises auf die Patenterteilung: **24.03.2004**
(21) Anmeldenummer: 02011409.6
(22) Anmeldetag: 24.05.2002
(51) Int. Cl.: A01K 5/02

(54) **Verfahren zur Flüssigfütterung von Schweinen**
Method for distributing liquid fodder to pigs
Méthode pour la distribution d'alimentation liquide aux cochons

(30) Priorität: 25.05.2001 DE 10125468
(43) Veröffentlichungstag der Anmeldung: 04.12.2002
(73) Patentinhaber: HAAKE, Hinrich, 22926 Ahrensburg (DE)
(72) Erfinder: HAAKE, Hinrich, 22926 Ahrensburg (DE)
(74) Vertreter: DIEHL GLAESER HILTL & PARTNER

(56) Entgegenhaltungen:
- EP-A- 0 595 784
- EP-A- 1 080 636
- DE-U- 29 616 053
- FR-A- 2 574 623

## Beschreibung

Die Erfindung bezieht sich auf ein Verfahren zur Flüssigfütterung von Schweinen, gemäß welchem in einem Mischbehälter das Futter aus den einzelnen Komponenten dosiert zusammengesetzt, gemischt und in gewünschter Teilmenge in ein Rohrleitungssystem abgegeben wird und die Futterteilmenge zu den einzelnen Futterstellen über Rohrleitungen mit Ventilen mit Hilfe von Druckluft gefördert wird.

Bei bekannten Verfahren dieser Art wird die Förderung einer Futterteilmenge zu einer gewünschten Abgabestelle über Druckluft bewerkstelligt, wobei der Druck so lange aufrecht erhalten wird, bis durch die vollständige Abgabe der Futtermittelmenge an der Abgabestelle der Druck zusammenbricht. Danach wird das entsprechende Ventil an der Abgabestelle abgesperrt und der Druck kann wiederum aufgebaut werden, um eine weitere Futtermittelmenge zu einer anderen Abgabestelle zu fördern.

Es liegt auf der Hand, dass dadurch verhältnismäßig viel Energie zur Bereitstellung des Druckmittels erforderlich ist, und zu dem Futter an der Abgabestelle so ausgegeben wird, dass Spritzverluste entstehen, weil ein Teil des Futters aus dem Futtertrog herausbefördert wird.

Hier will nun die vorliegende Erfindung Abhilfe schaffen, was bei einem Verfahren der eingangs genannten Art dadurch erreicht wird, dass Druckluft in Abhängigkeit des sich im Rohrleitungssystem ergebenden Druckverlaufs nur über einen solchen Zeitraum angelegt wird, der etwas kürzer als die erforderliche Zeitspanne ist, um die entsprechende Futterteilmenge vom Mischbehälter zu der gewünschten Futterstelle zu transportieren, wobei das sich in der Rohrleitung bildende Luftpolster für den vollständigen Transport der Futtermittelteilmenge sorgt.

Bei einer bevorzugten Ausführungsform wird der Maximalwert des sich im Rohrleitungssystems einstellenden Drucks ermittelt und die Druckluftzufuhr wird danach mit einer mehr oder weniger kurzen Verzögerung abgeschaltet. Das im Rohrleitungssystem noch vorhandene Druckpolster reicht aus, um die vorgesehene Futtermittelmenge vollständig in den Trog abzugeben.

Wenn eine bestimmte Futtermittelmenge aus dem Mischbehälter entnommen wird und an eine bestimmte Abnahmestelle gefördert werden soll, ergeben sich folgende Verhältnisse: Die entsprechende Menge wird über den Auslauf des Mischbehälters in die Verteilungseinrichtung gegeben und strömt durch die Hauptleitung zu dem entsprechenden Abzweig für die vorgesehene Futter-Abgabestelle. Nur dort ist das entsprechende Ventil geöffnet und nur dort kann die Futtermittelmenge - wie vorgesehen - ausgegeben werden.

Dieser Fördervorgang findet unter demjenigen Druck statt, der im Mischbehälter durch die dort angeschlossene Druckluftquelle aufgebaut wird. Zusätzlich wird über dieselbe Pumpe oder eine separate Pumpe strömungsmäßig vor dem Auslassventil des Mischbehälters Druckluft in die Versorgungsleitung eingegeben, so dass die entsprechende Futtermittelmenge den vorskizzierten Weg zur Futterstelle nehmen kann.

Der erforderliche Förderdruck ist unterschiedlich groß, was von vielen Faktoren abhängt. Damit auch kleine Futtermittelmengen abgegeben werden können, sollte der Querschnitt der Rohrleitungen zu der Abgabestelle möglichst klein sein. Dies bedeutet aber, dass, je länger der Weg bis zur Abgabestelle ist, der Druck höher sein muss. Die Temperatur und auch die Zusammensetzung und Viskosität des Futtermittels beeinflussen die Druckverhältnisse. Die Druckverhältnisse selbst gestalten sich auch unterschiedlich, je nachdem, wie sich das Volumen der abgegebenen Futtermittelmenge zum Volumen der zugehörigen Rohrleitung verhält.

Nach der Erfindung wird auf den Druckverlauf abgestellt, der sich bei der Abgabe einer bestimmten Futtermittelmenge in der Rohrleitung einstellt. Nach einer Ausführungsform der Erfindung wird dabei auf den Maximaldruck als Kriterium abgestellt. Nach einer anderen Ausführungsform der Erfindung werden Erfahrungswerte berücksichtigt, die Viskosität, Temperatur, Leitungsquerschnittsverhältnis, Futtermittelzusammensetzung u. dgl. erfassen.

Wenn bei einer Ausführungsform der Erfindung eine bestimmte Futtermittelmenge in die Leitung hineingedrückt wird, so ist zu beobachten, dass der Förderdruck zunächst stetig ansteigt, was darauf zurückzuführen ist, dass das Futtermittel über eine immer größer werdende Strecke der Rohrleitung gefördert werden muss. Erst in dem Moment, wo der erste Teil der geförderten Futtermittelmenge an der Abgabestelle ankommt und dort austritt, sinkt der Druck wieder. Gemäß der einen Ausführungsform der Erfindung wird auf diesen maximalen Druckwert abgestellt und mit einer mehr oder weniger großen zeitlichen Verzögerung wird die Druckluftzufuhr in die Hauptleitung eingestellt. Erfahrungsgemäß hat sich gezeigt, dass das zu diesem Zeitpunkt des Abstellens in der Rohrleitung vorhandene Druckluftpolster ausreicht, um die gesamte zu fördernde Futtermittelmenge bis zur Abgabestelle zu transportieren. Hierdurch wird ein Einspareffekt an Energie erzielt, weil eben nicht mehr Druckluft zur Förderung eingesetzt wird, als notwendig ist.

Bei bekannten Verfahren wird auf dieses Kriterium nicht abgestellt, sondern es wird Druckmittel so lange in die Leitung hinein gegeben, bis auch der letzte Rest der Futtermittelmenge an der Abgabestelle ausgegeben worden ist. Die Ersparnis an Druckmittel bei dem Verfahren gemäß der Erfindung ist außergewöhnlich groß und erreicht Größenordnungen bis zu 50%.

Das Restluftpolster in der Leitung bzw. der Expansionsdruck minimiert auch die Spritzverluste. Darüber hinaus können auch kleine Futtermengen (unter 15 l) restlos verteilt werden, da keine Pumpenansaugung mit Restmenge vorhanden ist.

Das erforderliche Messgerät zur Erfassung des maximalen Drucks in der Leitung ist, beispielsweise ein einfächer Drucksensor, der den Druck kontinuierlich misst und in entsprechender Form als Signal an einen Rechner weitergibt, der daraus das Maximum ermittelt. Derartige Sensoren und Rechner sind leicht zu realisieren und in verschiedenen Ausführungsformen im Handel erhältlich.

Mit Hilfe des Verfahrens gemäß der Erfindung können relativ kleine Mischbehälter im Bereich von unter 100 l Volumen eingesetzt werden und Anmischmengen von unter 15 l abgegeben werden, wobei die Wiegegenauigkeit im Bereich von ± 10 g liegt.

Das Verfahren gemäß der vorliegenden Erfindung lässt sich am günstigsten in einer Vorrichtung realisieren, die durch folgende Merkmale geprägt wird:

Von oben her wird das Trockenfutter durch eine Schleuse (beispielsweise einen Kugelhahn oder ein Klappventil bis 15 bar) in den Mischbehälter eingegeben, dann werden die Flüssigkomponenten über einen schnell laufenden Rührkopf von unten her in den Mischbehälter eingeleitet. Es ist hierbei zweckmäßig, die flüssigen Komponenten konzentrisch zur sich drehenden Welle des Rührers einzuführen.

Auch bei einem System mit Ringleitung können Abgabeventile im frostfreien Bereich vorhanden sein, wobei Futter durch kleine Abgaberohre bis in den Trog hinein gefördert wird.

Die Ringleitung muss nur selten gereinigt werden und somit auch die möglichst kurzen Förderwege hinter dem Abgabeventil bis in den Trog hinein, und zwar nur einmal oder wenige Male am Tag. Futterreste werden also nicht mit dem Futter anderer Tröge vermischt.

Bedingt durch die kleinen Rohrquerschnitte von weniger als 32 mm Durchmesser, vorzugsweise 25 mm, und die Verwendung von 16-bar-Kunststoff-Rohren kann die Expansionsfläche im Trog entsprechend gering sein, so dass kein Zyklon nötig ist. Der kleine Rohrquerschnitt der Förderleitung wird dadurch möglich, dass die Anlage nicht mit einer Pumpe, sondern mit Druckluft bis 16 bar einer Druckluftversorgung arbeitet. Damit kann auch keine Ansaugrestmenge entstehen. Der Behälter mit Zufuhr- und Abgabeöffnungen ist so ausgebildet, dass keine Restmengenvermischungen entstehen können.

Wenn ein Baby-Ferkel (bis 6 kg Gewicht) z.B. pro Tag am Anfang 100 g Futter benötigt und mehr als zehn Mal am Tag Futter abgegeben werden soll, sind auch besonders kleine Futtermengen zu fördern. Dieses ist mit herkömmlichen Pumpen nicht möglich. Gemäß der Erfindung können jedoch kleinste Anmischungen in kleinsten Portionen realisiert werden.

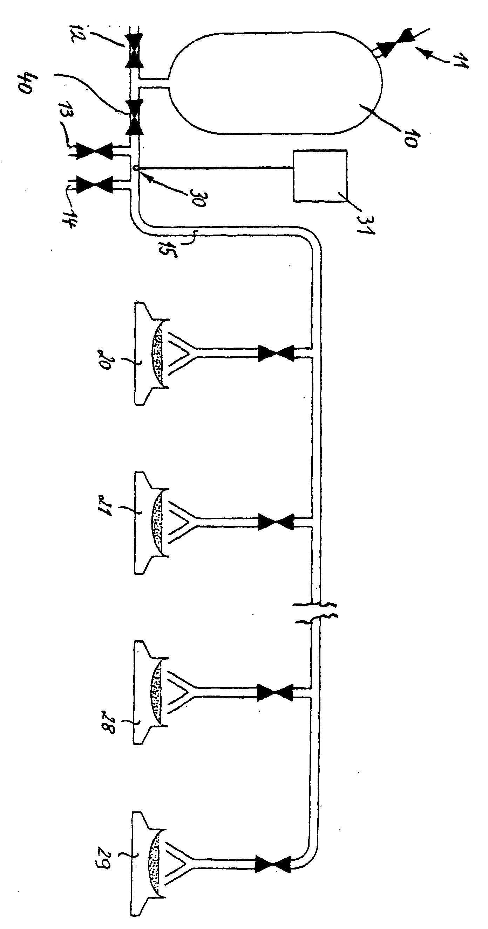

Die Erfindung wird nachstehend anhand der Zeichnung beispielsweise erläutert.

Die Figur zeigt eine Fütterungsanlage, in welchem die Erfindung realisiert worden ist.

Mit 10 ist ein Anmischbehälter bezeichnet, in den die einzelnen Futtermittelkomponenten eingegeben werden. Diese Einrichtungen sind ebenso wie das Rührwerk und dgl. bekannt und sind daher hier nicht im Einzelnen gezeigt und beschrieben.

Mit 11 ist eine Leitung bezeichnet worden, die mit einer Druckmittelquelle verbunden ist und in den Anmischbehälter 10 hineinführt.

Am unteren Ende des Anmischbehälters 10 kann die vorgegebene Futtermittelmenge abgegeben werden, wobei zu diesem Zweck das rechtsseitig gezeigte Ventil 40 geöffnet wird, um den Weg für das Futter freizumachen, wobei das linksseitig gezeigte Ventil 12 ebenfalls geöffnet wird, damit von dort her eingeleitetes Druckmittel den Fördervorgang in eine Leitung 15 bewerkstelligen kann. Es liegt auf der Hand, dass die Verbindung in dem Anmischbehälter 10 geschlossen wird, wenn die abzugebende Futtermittelmenge in die Rohrleitung gelangt ist. Über die Rohrleitung 15, im vorliegenden Fall eine Einzelleitung, die aber auch ebenso gut eine Ringleitung sein könnte, wird das Futtermittel zu einer gewünschten Abgabestelle 20, 21, ... 28, 29 gefördert.

Mit 13 und 14 sind Zuleitungen für Luft 13 und Wasser 14 zu Reinigungszwecken bezeichnet worden.

Gemäß der Erfindung ist im Bereich der Rohrleitung 15 ein Drucksensor 30 vorgesehen, der mit einem Rechner 31 verbunden ist. Der Drucksensor 30 fühlt den in der Leitung 15 herrschenden Druck ab, während der Rechner 31 aus diesem Drucksignalen das Maximum ermittelt. Bei Erreichen des Maximalwertes (z.B. 1 ... 10 sec. Verzögerung) wird die Verbindung zur Druckmittelquelle abgeschlossen. Das nun noch in der Leitung 15 vorhandene Druckluftpolster sorgt für den restlosen Transport der Futtermittelmenge zur vorgesehenen Abgabestelle.

## Patentansprüche

1. Verfahren zur Flüssigfütterung von Schweinen, gemäß welchem in einem Mischbehälter das Futter aus den einzelnen Komponenten dosiert zusammengesetzt, gemischt und in gewünschter Teilmenge über Rohrleitungen zu der jeweiligen Futterstelle mit Hilfe von Druckluft gefördert wird, **dadurch gekennzeichnet, dass** die Druckluft nur über eine Zeitspanne angelegt wird, die kürzer als die Zeitspanne ist, um die Futterteilmenge vollständig vom Mischbehälter zu der gewünschten Futterstelle zu transportieren.

2. Verfahren nach Anspruch 1, **dadurch gekennzeichnet, dass** bei Abgabe einer Futterteilmenge der Maximalwert des sich in der zugehörigen Rohrleitung einstellenden Drucks unabhängig von der Konsistenz des Futters ermittelt und die Druckluftzufuhr kurz danach, vorzugsweise 1 - 4 sec., beendet wird.

## Claims

1. Method for liquid feeding of pigs, according to which the feed is prepared from the metered individual components and mixed in a blending vessel and is conveyed in the desired partial amount through pipes to the respective feeding place by means of pressurised air, **characterised in that** the pressurised air is applied only for a short period of time, which is shorter than the period of time required to convey the partial feed amount completely from the blending vessel to the desired feeding place.

2. Method according to claim 1, **characterised in that** during discharge of a partial feed amount, the maximum value of the pressure building up in the associated pipe is detected independently of the consistency of the feed and the delivery of pressurised air is terminated shortly thereafter, i. e. preferably after 1-4 seconds.

## Revendications

1. Procédé pour l'alimentation liquide des porcs, selon lequel l'aliment est composé dans un bac de mélange à partir d'un dosage des différents composants, mélangé et transporté sous pression vers des auges par l'intermédiaire de conduites sous forme de portions souhaitées de l'ensemble de l'aliment, **caractérisé en ce que** l'air comprimé est appliqué uniquement pendant un laps de temps qui est plus court que le laps de temps pour transporter complètement la portion de l'ensemble de l'aliment du bac de mélange à l'auge souhaitée.

2. Procédé selon la revendication 1, **caractérisé en ce que** lors de la remise d'une portion de l'ensemble de l'aliment, une valeur maximum de la pression s'installant dans la canalisation appropriée est déterminée indépendamment de la consistance de l'aliment et il est mis fin à l'alimentation en air comprimé, de préférence, 1-4 secondes après cela.
